# EUROPÄISCHE PATENTANMELDUNG

(11) **EP 1 037 450 A2**
(43) Veröffentlichungstag der Anmeldung: **20.09.2000**
(21) Anmeldenummer: 00250097.3
(22) Anmeldetag: 17.03.2000
(51) Int. Cl.: H04M 1/725, H04M 1/02

(54) **Telekommunikationsgerät und Erweiterungsvorrichtung für ein Telekommikationsgerät**

(30) Priorität: 17.03.1999 DE 19913060
(71) Anmelder: SIEMENS AKTIENGESELLSCHAFT, 80333 München (DE)
(72) Erfinder: Könemann, Dirk, 24161 Altenholz (DE); Bittermann, Jörg, 31188 Holle (DE)

(57) **Zusammenfassung**

Die Erfindung bezieht sich auf ein Telekommunikationsgerät (5) mit einer Funkeinrichtung (10) zum drahtlosen Senden und Empfangen von Daten- und/oder Sprachsignalen (S) in mindestens einem vorgegebenen Kommunikationsstandard (A),
- wobei das Telekommunikationsgerät (5) eine geräteseitige Schnittstelle (20) aufweist, an die mindestens eine Erweiterungsvorrichtung (25) zum drahtlosen Senden und Empfangen der Signale (S) in mindestens einem von dem vorgegebenen Kommunikationsstandard (A) unterschiedlichen Erweiterungs-Kommunikationsstandard (B, C) anschließbar ist und
- wobei das Telekommunikationsgerät (5) mit mechanischen Befestigungselementen (65) versehen ist, mit denen die mindestens eine Erweiterungsvorrichtung (25) an dem Telekommunikationsgerät (5) befestigbar ist.

Besonders verschleißarm ist die geräteseitige Schnittstelle, wenn sie erfindungsgemäß eine Schnittstelle ist, die ihre Schnittstellensignale mit elektromagnetischen Wellen überträgt.

## Beschreibung

Die Erfindung bezieht sich auf ein Telekommunikationsgerät mit einer Funkeinrichtung zum drahtlosen Senden und Empfangen von Daten- und/oder Sprachsignalen in mindestens einem vorgegebenen Kommunikationsstandard, wobei das Telekommunikationsgerät eine geräteseitige Schnittstelle aufweist, an die mindestens eine Erweiterungsvorrichtung zum drahtlosen Senden und Empfangen der Signale in mindestens einem von dem vorgegebenen Kommunikationsstandard unterschiedlichen Erweiterungs-Kommunikationsstandard anschließbar ist und wobei das Telekommunikationsgerät mit mechanischen Befestigungselementen versehen ist, mit denen die mindestens eine Erweiterungsvorrichtung an dem Telekommunikationsgerät befestigbar ist.

Ein derartiges Telekommunikationsgerät wird von der Fa. Motorola unter dem Produktnamen 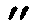 Motorola 9500 Satellite Series Phone" angeboten. Dieses vorbekannte Telekommunikationsgerät ist ein Funktelefon und weist eine Funkeinrichtung zum drahtlosen Senden und Empfangen von Daten- und/oder Sprachsignalen im Iridium-Kommunikationsstandard auf. Geräteseitig ist bei dem vorbekannten Telekommunikationsgerät eine Schnittstelle in Form einer Einschuböffnung vorgesehen, in die eine Einschubkassette als Erweiterungsvorrichtung in das Telekommunikationsgerät eingeführt werden kann. Diese Kassette ist zum drahtlosen Senden und Empfangen der Signale in einem von dem vorgegebenen Iridium-Kommunikationsstandard unterschiedlichen Erweiterungs-Kommunikationsstandard - beispielsweise GSM, DCS1800, TDMA800 oder einem anderen Kommunikationsstandard - geeignet, so daß das vorbekannte Telekommunikationsgerät bei eingeschobener Kassette in dem Erweiterungs-Kommunikationsstandard der Kassette betrieben werden kann. Die geräteseitige Schnittstelle zum Übertragen von Daten und/oder Sprache ist bei dem vorbekannten Telekommunikationsgerät durch elektrische Kontaktanschlüsse realisiert, die mit entsprechenden Kontaktanschlüssen der Kassette zusammensteckbar sind.

Der Erfindung liegt die Aufgabe zugrunde, ein Telekommunikationsgerät mit einer besonders verschleißarmen Schnittstelle anzugeben; unter einer verschleißarmen Schnittstelle wird dabei eine Schnittstelle verstanden, die ein häufiges Anschließen bzw. Abtrennen von Erweiterungsvorrichtungen an das bzw. von dem Telekommunikationsgerät ohne wesentliche Verschleißerscheinungen erlaubt.

Zur Lösung dieser Aufgabe wird bei einem Telekommunikationsgerät der eingangs angegebenen Art erfindungsgemäß vorgeschlagen, daß die geräteseitige Schnittstelle eine Schnittstelle ist, die ihre Schnittstellensignale mit elektromagnetischen Wellen überträgt.

Ein wesentlicher Vorteil des erfindungsgemäßen Telekommunikationsgerätes besteht darin, daß aufgrund der Verwendung einer mit elektromagnetischen Wellen arbeitenden Schnittstelle auf mechanische elektrische Kontaktanschlüsse z. B. aus Gold oder anderen Edelmetallen zum Anschluß einer Erweiterungsvorrichtung an das Telekommunikationsgerät verzichtet werden kann, so daß bei dem erfindungsgemäßen Telekommunikationsgerät an der Schnittstelle prinzipiell keine elektrischen Kontaktprobleme auftreten können; im übrigen werden Gold oder andere Edelmetalle eingespart, so daß das erfindungsgemäße Telekommunikationsgerät besonders kostengünstig ist. Aus diesem Grunde ist die geräteseitige Schnittstelle des erfindungsgemäßen Telekommunikationsgerätes auch verschleißfrei, da selbst bei einem häufigen Anschließen oder Abtrennen von Erweiterungsvorrichtungen an der Schnittstelle keine mechanischen Verschleißerscheinungen eintreten können. Ein weiterer wesentlicher Vorteil des erfindungsgemäßen Telekommunikationsgerätes besteht in seiner besonders einfachen mechanischen Fertigung der geräteseitigen Gehäuseteile, da auf elektrische Anschlußkontakte für die Schnittstelle verzichtet werden kann.

Gemäß einer ersten Weiterbildung des erfindungsgemäßen Telekommunikationsgerätes wird es als vorteilhaft angesehen, wenn die geräteseitige Schnittstelle eine Funkschnittstelle ist. Ein wesentlicher Vorteil dieser Weiterbildung des erfindungsgemäßen Telekommunikationsgerätes besteht darin, daß es auch bei widrigen Umwelteinflüssen stets einsetzbar ist, da Feuchtigkeit oder Verschmutzungen, beispielsweise durch Staub, die Kontaktgabe zwischen Erweiterungsvorrichtung und Telekommunikationsgerät nicht beeinträchtigen können.

Besonders kostengünstig läßt sich das erfindungsgemäße Telekommunikationsgerät gemäß der Weiterbildung herstellen, wenn die Funkschnittstelle von der Funkeinrichtung des Telekommunikationsgerätes gebildet ist, da bei dieser Weiterbildung des erfindungsgemäßen Telekommunikationsgerätes auf eine zusätzliche Funkeinrichtung zum Betrieb der geräteseitigen Schnittstelle verzichtet werden kann.

Gemäß einer anderen Weiterbildung des erfindungsgemäßen Telekommunikationsgerätes wird als vorteilhaft angesehen, wenn die geräteseitige Schnittstelle eine optische Schnittstelle ist. Ein wesentlicher Vorteil dieser anderen Weiterbildung des erfindungsgemäßen Telekommunikationsgerätes besteht darin, daß aufgrund der Verwendung einer optischen Schnittstelle ohne technische Probleme auch sehr große Datenmengen in kurzer Zeit über die Schnittstelle übertragen werden können, da bekannterweise bei optischen Übertragungssystemen eine sehr hohe Datenrate möglich ist.

Besonders kostengünstig läßt sich das erfindungsgemäße Telekommunikationsgerät herstellen, wenn die optische Schnittstelle eine Infrarot-Schnittstelle ist, da Infrarot-Sende- bzw. Empfangsmodule heutzutage als Standardkomponenten erhältlich und damit besonders kostengünstig sind.

Besonders vorteilhaft läßt sich das erfindungsgemäße Telekommunikationsgerät beispielsweise als tragbares Funktelefon einsetzen.

Die Erfindung bezieht sich außerdem auf eine Erweiterungsvorrichtung mit einer vorrichtungseigenen Funkeinrichtung zum drahtlosen Senden und Empfangen von Daten- und/oder Sprachsignalen in mindestens einem Erweiterungs-Kommunikationsstandard, mit einer vorrichtungseigenen Schnittstelle, über die die Erweiterungsvorrichtung an ein Telekommunikationsgerät zum Betrieb des Telekommunikationsgerätes in dem Erweiterungs-Kommunikationsstandard anschließbar ist, und mit mechanischen Verbindungselementen in einer derartigen Ausführung, daß diese mit mechanischen Befestigungselementen des Telekommunikationsgerätes zum Befestigen der Erweiterungsvorrichtung an dem Telekommunikationsgerät mechanisch verbindbar sind.

Eine derartige Erweiterungsvorrichtung wird als Einschubkassette zum eingangs erläuterten Motorola-Iridium-Funktelefon bereits kommerziell angeboten. Wie bereits eingangs erläutert, weist diese vorbekannte Erweiterungsvorrichtung als Schnittstelle mechanische elektrische Kontaktanschlüsse auf, mit denen die Erweiterungsvorrichtung an das vorbekannte Iridium-Funktelefon angeschlossen werden kann.

Der Erfindung liegt bezüglich der Erweiterungsvorrichtung die Aufgabe zugrunde, eine Erweiterungsvorrichtung der vorbekannten Art dahingehend zu verbessern, daß die Schnittstelle besonders verschleißarm ist und somit auch bei häufigem Anschließen bzw. Abtrennen der Erweiterungsvorrichtung an bzw. von einem Telekommunikationsgerät eine zuverlässige Verbindung zwischen Erweiterungsvorrichtung und Telekommunikationsgerät ermöglicht.

Diese Aufgabe wird bei einer Erweiterungsvornichtung der beschriebenen Art erfindungsgemäß dadurch erreicht, daß die vorrichtungseigene Schnittstelle eine Schnittstelle ist, die ihre Schnittstellensignale mit elektromagnetischen Wellen überträgt.

Die im Zusammenhang mit dem erfindungsgemäßen Telekommunikationsgerät beschriebenen Vorteile gelten für die erfindungsgemäße Erweiterungsvorrichtung entsprechend. Das gleiche gilt für die in den Unteransprüchen zur erfindungsgemäßen Erweiterungsvorrichtung beschriebenen Varianten der Schnittstellenrealisierung; denn die Vorteile dieser verschiedenen Varianten wurden ebenfalls bereits im Zusammenhang mit dem erfindungsgemäßen Telekommunikationsgerät erläutert.

Zur Funkschnittstelle sei lediglich noch angemerkt, daß Erweiterungsvorrichtungen prinzipiell verschiedene Funktionen ausüben können; so ist es beispielsweise denkbar, eine Erweiterungsvorrichtung an ein Telekommunikationsgerät anzuschließen, mit der die Ausgangssendeleistung des Telekommunikationsgerätes erhöht wird, um eine höhere Reichweite des Telekommunikationsgerätes zu erreichen. Soll mit der Erweiterungsvorrichtung jedoch beispielsweise erreicht werden, daß das Telekommunikationsgerät in einem anderen Kommunikationsstandard betrieben werden kann, als bei dem Telekommunikationsgerät selbst vorgesehen ist, so läßt sich die erfindungsgemäße Erweiterungsvorrichtung mit Funkschnittstelle in vorteilhafter Weise in der Weise weiterbilden, daß sich die weitere vorrichtungseigene Funkeinrichtung von der einen vorrichtungseigenen Funkeinrichtung im Kommunikationsstandard unterscheidet.

Die Erweiterungsvorrichtung kann als separate Vorrichtung an einem Telekommunikationsgerät angebracht werden; besonders einfach und damit vorteilhaft läßt sich jedoch die Erweiterungsvorrichtung an das Telekommunikationsgerät anschließen, wenn die Erweiterungsvorrichtung an den sowieso bei tragbaren Telekommunikationsgeräten vorhandenen Batterieanschluß des Telekommunikationsgerätes angeschlossen wird; dies setzt voraus, daß die Erweiterungsvorrichtung die zum Betrieb des Telekommunikationsgerätes erforderliche Stromversorgung bereitstellt. Daher wird gemäß einer Weiterbildung der erfindungsgemäßen Erweiterungsvorrichtung vorgeschlagen, daß die Erweiterungsvorrichtung eine Batterie mit elektrischen Anschlüssen in einer derartigen Anordnung aufweist, daß diese mit Batterieanschlüssen des Telekommunikationsgerätes in Kontakt bringbar sind. Bei dieser Weiterbildung der erfindungsgemäßen Erweiterungsvorrichtung bilden die vorrichtungseigene Funkeinrichtung der Erweiterungsvorrichtung und die Batterie also eine Baueinheit, die als 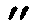 Akkupack" bezeichnet werden kann, das eine Erweiterung des Kommunikationsstandards des Telekommunikationsgerätes ermöglicht.

Selbstverständlich kann aie erfindungsgemäße Erweiterungsvorrichtung mit den erfindungsgemäßen Telekommunikationsgerät fest verbunden sein, so daß eine Kombination bestehend aus einem erfindungsgemäßen Telekommunikationsgerät und einer erfindungsgemäßen Erweiterungsvorrichtung ebenfalls als Erfindung betrachtet wird.

Zur Erläuterung der Erfindung zeigt
Figur 1 ein Ausführungsbeispiel für ein erfindungsgemäßes Telekommunikationsgerät mit einer Funkschnittstelle sowie ein Ausführungsbeispiel für eine dazu passende Erweiterungsvorrichtung und
Figur 2 ein Ausführungsbeispiel für ein erfindungsgemäßes Telekommunikationsgerät mit einer optischen Schnittstelle sowie ein Ausführungsbeispiel für eine dazu passende Erweiterungsvorrichtung.

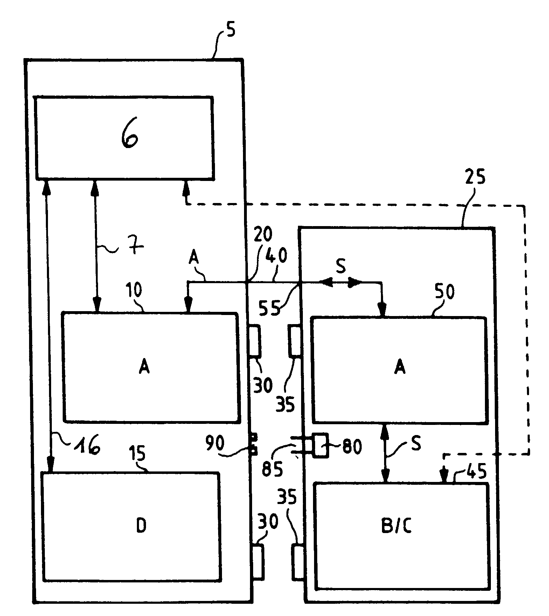

Die Figur 1 zeigt ein Telekommunikationsgerät 5 in Form eines tragbaren Funktelefons. Das Telekommunikationsgerät 5 weist eine zentrale Steuervorrichtung 6 auf, der über eine Datenleitung 7 eine Funkeinrichtung 10 zum drahtlosen Senden und Empfangen von Daten- und/oder Sprachsignalen in einem vorgegebenen Kommunikationsstandard A nachgeordnet ist. Zusätzlich ist das Telekommunikationsgerät 5 mit einer weiteren Funkeinrichtung 15 ausgestattet, mit der das Telekommunikationsgerät 5 in einem weiteren Kommunikationsstandard, und zwar dem Kommunikationsstandard D, betrieben werden kann. Diese weitere Funkeinrichtung 15 ist über eine weitere Datenleitung 16 mit der zentralen Steuervorrichtung 6 verbunden. Das Telekommunikationsgerät 5 weist eine geräteseitige Schnittstelle 20 auf, an die eine Erweiterungsvorrichtung 25 zum drahtlosen Senden und Empfangen der Signale in einem von dem vorgegebenen Kommunikationsstandard A und von dem weiteren Kommunikationsstandard D unterschiedlichen Erweiterungs-Kommunikationsstandard B oder C anschließbar ist. Das Telekommunikationsgerät 5 ist mit mechanischen Befestigungselementen 30 ausgestattet, mit denen die Erweiterungsvorrichtung 25 mit ihren mechanischen Verbindungselementen 35 an dem Telekommunikationsgerät 5 befestigbar ist. Die Befestigungselemente 30 des Telekommunikationsgeräts 5 sowie die mechanischen Verbindungselemente 35 der Erweiterungsvorrichtung 25 sind in der Figur 1 nur schematisch dargestellt; es läßt sich der Figur 1 jedoch ohne weiteres entnehmen, daß die mechanischen Verbindungselemente 35 der Erweiterungsvorrichtung 25 in einer derartigen Ausführung vorgesehen sind, daß die mechanischen Verbindungselemente 35 mit den mechanischen Befestigungselementen 30 des Telekommunikationsgerätes 5 zum Befestigen der Erweiterungsvorrichtung 25 an dem Telekommunikationsgerät 5 mechanisch verbindbar sind.

In der Figur 1 ist mit einer Linie 40 die Schnittsteilenverbindung zwischen der Erweiterungsvorrichtung 25 und dem Telekommunikationsgerät 5 angedeutet. Man erkennt, daß die Schnittstelle 40 eine Funkschnittstelle ist, die bei dem Telekommunikationsgerät 5 gemäß der Figur 1 durch die Funkeinrichtung 10 des Telekommunikationsgerätes 5 gebildet ist. Ist die Erweiterungsvorrichtung 25 an das Telekommunikationsgerät 5 angeschlossen, so läßt sich das Telekommunikationsgerät 5 mit einem der von der Erweiterungsvorrichtung 25 angebotenen Erweiterungs-Kommunikationsstandard B oder C betreiben; hierzu ist die Erweiterungvorrichtung 25 mit einer vorrichtungseigenen Funkeinrichtung 45 ausgestattet, die im Erweiterungs-Kommunikationsstandard B oder C betrieben werden kann.

Die Erweiterungsvorrichtung 25 weist zum Anschluß an das Telekommunikationsgerät 5 eine weitere vorrichtungseigene Funkeinrichtung 50 auf, die über eine vorrichtungseigene Schnittstelle 55 mit der geräteseitigen Schnittstelle 20 des Telekommunikationsgerätes 5 über eine Funkverbindung verbunden ist. Die Schnittstelle zwischen der Erweiterungsvorrichtung 25 und dem Telekommunikationsgerät 5 wird also - wie bereits angesprochen - durch eine Funkschnittstelle gebildet zwischen der Funkeinrichtung 10 des Telekommunikationsgerätes 5 und der weiteren vorrichtungseigenen Funkeinrichtung 50 der Erweiterungseinrichtung 25. Mit der weiteren vorrichtungseigenen Funkeinrichtung 50 der Erweiterungsvorrichtung 25 ist die vorrichtungseigene Funkeinrichtung 45 verbunden, die in den zwei Erweiterungs-Kommunikationsstandards B und C betrieben werden kann.

Die Funktionsweise der Erweiterungsvorrichtung 25 und des Telekommunikationsgerätes 5 soll nun erläutert werden: Ist die Erweiterungsvorrichtung 25 mechanisch mit dem Telekommunikationsgerät 5 verbunden, so wird eine Funkverbindung zwischen der weiteren vorrichtungseigenen Funkeinrichtung 50 der Erweiterungsvorrichtung 25 und der Funkeinrichtung 10 des Telekommunikationsgerätes 5 aufgebaut. Diese Funkverbindung erfolgt nach dem Kommunikationsstandard A. Über diese Funkschnittstelle werden die Daten- und/oder Sprachsignale des Telekommunikationsgerätes 5 zu der Erweiterungsvorrichtung 25, oder umgekehrt, im Kommunikationsstandard A übertragen. Von der weiteren vorrichtungseigenen Funkeinrichtung 50 werden diese Daten- und/oder Sprachsignale S, im folgenden kurz Signale genannt, zu der vorrichtungseigenen Funkeinrichtung 45 übertragen und mit dieser wahlweise gemäß dem Kommunikationsstandard B oder C ausgesendet. In entsprechender Weise funktioniert der Empfang von Signalen zum Telekommunikationsgerät 5 über die Erweiterungsvorrichtung 25: Werden die Signale S mit der vorrichtungseigenen Funkeinrichtung 45 im Kommunikationsstandard B oder C empfangen, so werden diese zu der weiteren vorrichtungseigenen Funkeinrichtung 50 der Erweiterungsvorrichtung 25 übertragen und dort im Kommunikationsstandard A über die Schnittstelle 40 zu der Funkeinrichtung 10 des Telekommunikationsgerätes 5 übertragen.

In der Figur 1 ist darüber hinaus schematisch eine Batterie 80 dargestellt, die elektrische Anschlüsse 85 aufweist. Diese Batterieanschlüsse 85 sind mit Batterieanschlüssen 90 des Telekommunikationsgerätes 5 in Kontakt bringbar, so daß die Stromversorgung des Telekommunikationsgerätes 5 über die Erweiterungsvorrichtung 25 erfolgen kann. Die Erweiterungsvorrichtung 25 kann somit als eine Art Akkupack angesehen werden, das eine Erweiterung des Kommunikationsstandards des Telekommunikationsgerätes 5 ermöglicht.

Zusammengefaßt kann das Telekommunikationsgerät 5 also in einem der beiden Erweiterungsstandards B oder C betrieben werden, wenn die Erweiterungsvorrichtung 25 an das Telekommunikationsgerät 5 angeschlossen ist; dies ist in der Figur 1 durch eine gestrichelte Linie 100 angedeutet.

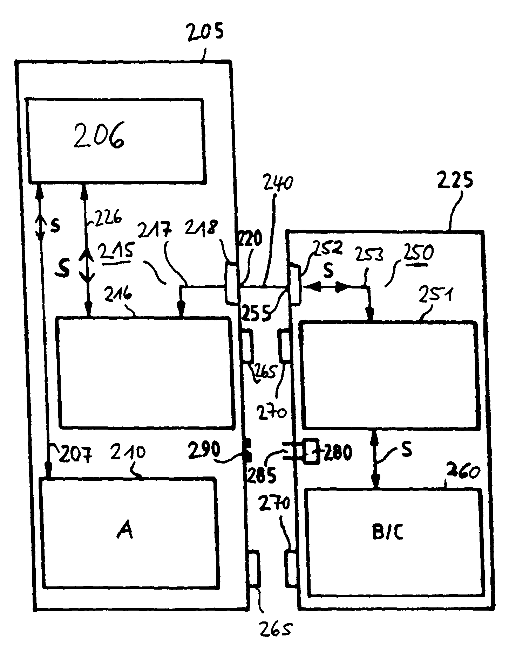

Die Figur 2 zeigt ein Telekommunikationsgerät 205 in Form eines tragbaren Funktelefons. Das Telekommunikationsgerät 205 weist eine zentrale Steuervorrichtung 206 auf, der über eine erste Datenleitung 207 eine Funkeinrichtung 210 zum drahtlosen Senden und Empfangen von Daten- und/oder Sprachsignalen 5 in einem vorgegebenen Kommunikationsstandard A nachgeordnet ist. Zusätzlich ist das Telekommunikationsgerät 205 mit einer Infrarot-Sende- und Empfangseinrichtung 215 ausgestattet, die aus einer Steuereinrichtung 216 und einem über eine Steuerleitung 217 mit der Steuereinrichtung 216 verbundenen, optisch aktiven Sende/Empfangselement 218 besteht. Das optisch aktive Sende/Empfangselement 218 - beispielsweise bestehend aus einer Laserdiode und einer Empfangsdiode - bildet eine telekommunikationsgeräteseitige Schnittstelle 220, an die eine Erweiterungsvorrichtung 225 zum drahtlosen Senden und Empfangen der Daten- und/oder Sprachsignale S in einem von dem vorgegebenen Kommunikationsstandard A unterschiedlichen Erweiterungs-Kommunikationsstandard B oder C anschließbar ist. Die Infrarot-Sende- und Empfangseinrichtung 215 ist über eine zweite Datenleitung 226 mit der zentralen Steuervorrichtung 206 verbunden.

Die Schnittstellenverbindung zwischen der Erweiterungsvorrichtung 225 und dem Telekommunikationsgerät 205 ist in der Figur 2 mit einer Linie 240 angedeutet. Die Erweiterungsvorrichtung 225 weist zum Anschluß an das Telekommunikationsgerät 205 eine vorrichtungseigene Infrarot-Sende- und Empfangseinrichtung 250 auf, die aus einer vorrichtungseigenen Steuereinrichtung 251 und einem vorrichtungseigenen, optisch aktiven Sende/Empfangselement 252 besteht; dieses Sende/Empfangselement 252 kann beispielsweise durch eine Laserdiode und eine Empfangsdiode gebildet sein. Das Sende/Empfangselement 252 ist über eine vorrichtungseigene Steuerleitung 253 mit der vorrichtungseigenen Steuereinrichtung 251 verbunden.

Das vorrichtungseigene Sende/Empfangselement 252 bildet eine vorrichtungseigene Schnittstelle 255 zum Anschluß der Erweiterungsvorrichtung 225 an das Telekommunikationsgerät 205. Mit der vorrichtungseigenen Steuereinrichtung 251 ist eine vorrichtungseigene Funkeinrichtung 260 verbunden, die in den zwei Erweiterungs-Kommunikationsstandards B und C betrieben werden kann. Ist die Erweiterungsvorrichtung 225 an das Telekommunikationsgerät 205 angeschlossen, so läßt sich das Telekommunikationsgerät 205 also mit einem der beiden Erweiterungs-Kommunikationsstandards B oder C der Erweiterungsvorrichtung 225 betreiben.

Zum mechanischen Anschluß bzw. zur Befestigung der Erweiterungsvorrichtung 225 an dem Telekommunikationsgerät 205 ist dieses mit mechanischen Befestigungselementen 265 ausgestattet, die mit mechanischen Verbindungselementen 270 der Erweiterungsvorrichtung 225 zusammenwirken. Die Befestigungselemente 265 des Telekommunikationsgeräts 205 sowie die mechanischen Verbindungselemente 270 der Erweiterungsvorrichtung 225 sind in der Figur 2 nur schematisch dargestellt; es läßt sich der Figur 2 jedoch ohne weiteres entnehmen, daß die mechanischen Verbindungselemente 270 der Erweiterungsvorrichtung 225 in einer derartigen Ausführung vorgesehen sind, daß sie mit den mechanischen Befestigungselementen 265 des Telekommunikationsgerätes 5 mechanisch verbindbar sind.

Die Funktionsweise der Erweiterungsvorrichtung 225 und des Telekommunikationsgerätes 205 soll nun erläutert werden: Ist die Erweiterungsvorrichtung 225 mechanisch mit dem Telekommunikationsgerät 205 verbunden, so wird - bei entsprechender Ansteuerung durch die Steuervorrichtung 206 des Telekommunikationsgerätes 205 - eine optische Infrarot-Datensignal-Verbindung zwischen der vorrichtungseigenen Infrarot-Sende- und Empfangseinrichtung 250 der Erweiterungsvorrichtung 225 und der Infrarot-Sende- und Empfangseinrichtung 215 des Telekommunikationsgerätes 205 aufgebaut. Der Aufbau der Datenverbindung kann dabei begonnen werden, sobald eine optische Verbindung, also eine 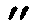 Sichtverbindung" zwischen der Erweiterungsvorrichtung 225 und dem Telekommunikationsgerät 205 besteht oder sobald die mechanische Verbindung zwischen der Erweiterungsvorrichtung 225 und dem Telekommunikationsgerät 205 zustande gekommen ist; diese letztgenannte Variante setzt dann entsprechende Kontaktgabeelemente voraus, die mit der Infrarot-Sende- und Empfangseinrichtung 215 oder mit der zentralen Steuervorrichtung 206 des Telekommunikationsgerätes 205 in Verbindung stehen.

Die Infrarot-Verbindung kann dabei in einem beliebigen Datenübertragungsstandard erfolgen; sobald die Infrarot-Verbindung über die Infrarot-Schnittstelle aufgebaut ist, lassen sich die Daten- und/oder Sprachsignale S zwischen dem Telekommunikationsgerät 205 und der Erweiterungsvorrichtung 225 untereinander austauschen. Konkret lassen sich nämlich die Daten- und/oder Sprachsignale S von der zentralen Steuervorrichtung 206 über deren Infrarot-Sende- und Empfangseinrichtung 215 und über die vorrichtungseigene Infrarot-Sende- und Empfangseinrichtung 250 zu der vorrichtungseigenen Funkeinrichtung 260 übertragen und mit dieser wahlweise gemäß dem Kommunikationsstandard B oder C aussenden. In entsprechender Weise funktioniert der Empfang der Daten- und/oder Sprachsignale S über die Erweiterungsvorrichtung 225: Werden die Daten- und/oder Sprachsignale S mit der vorrichtungseigenen Funkeinrichtung 260 im Kommunikationsstandard B oder C empfangen, so werden diese über die vorrichtungseigene Infrarot-Sende- und Empfangseinrichtung 250 und über die Infrarot-Sende- und Empfangseinrichtung 215 des Telekommunikationsgerätes 205 zu der zentralen Steuervorrichtung 206 übertragen.

In der Figur 2 ist darüber hinaus schematisch eine Batterie 280 dargestellt, die elektrische Anschlüsse 285 aufweist. Diese Batterieanschlüsse 285 sind mit Batterieanschlüssen 290 des Telekommunikationsgerätes 205 in Kontakt bringbar, so daß die Stromversorgung des Telekommunikationsgerätes 205 über die Erweiterungsvorrichtung 225 erfolgen kann. Die Erweiterungsvorrichtung 225 kann somit als eine Art Akkupack angesehen werden, das eine Erweiterung des Kommunikationsstandards des Telekommunikationsgerätes 205 ermöglicht.

Ganz allgemein gilt - also auch für die beiden Ausführungsbeispiele in den Figuren 1 und 2- daß bei Erweiterungsvorrichtungen ohne Batterie zur Stromversorgung des Telekommunikationsgerätes eine Ausführungsform der Erweiterungsvorrichtung beispielsweise in Form einer miniaturisierten Einsteckkarte bestehen könnte, wobei diese derart ausgestaltet sein kann, daß sie eine Handhabung vergleichbar mit der einer SIM-Card (Subscriber Identity Module) für Mobilfunk- Endgeräte ermöglicht.

## Patentansprüche

1. Telekommunikationsgerät (5) mit einer Funkeinrichtung (10) zum drahtlosen Senden und Empfangen von Daten- und/oder Sprachsignalen (S) in mindestens einem vorgegebenen Kommunikationsstandard (A),
- wobei das Telekommunikationsgerät (5) eine geräteseitige Schnittstelle (20) aufweist, an die mindestens eine Erweiterungsvorrichtung (25) zum drahtlosen Senden und Empfangen der Signale (S) in mindestens einem von dem vorgegebenen Kommunikationsstandard (A) unterschiedlichen Erweiterungs-Kommunikationsstandard (B, C) anschließbar ist und
- wobei das Telekommunikationsgerät (5) mit mechanischen Befestigungselementen (65) versehen ist, mit denen die mindestens eine Erweiterungsvorrichtung (25) an dem Telekommunikationsgerät (5) befestigbar ist,
**dadurch gekennzeichnet,** daß
- die geräteseitige Schnittstelle eine Schnittstelle ist, die ihre Schnittstellensignale mit elektromagnetischen Wellen überträgt.

2. Telekommunikationsgerät nach Anspruch 1,
**dadurch gekennzeichnet,** daß
- die geräteseitige Schnittstelle (20) eine Funkschnittstelle ist.

3. Telekommunikationsgerät nach Anspruch 2,
**dadurch gekennzeichnet,** daß
- die Funkschnittstelle (20) von der Funkeinrichtung (10) gebildet ist.

4. Telekommunikationsgerät nach Anspruch 1,
**dadurch gekennzeichnet,** daß
- die geräteseitige Schnittstelle (20) eine optische Schnittstelle ist.

5. Telekommunikationsgerät nach Anspruch 4,
**dadurch gekennzeichnet,** daß
- die optische Schnittstelle (20) eine Infrarot-Schnittstelle ist.

6. Telekommunikationsgerät nach einem der vorangehenden Ansprüche,
**dadurch gekennzeichnet,** daß
- das Telekommunikationsgerät (5) ein tragbares Funktelefon ist.

7. Erweiterungsvorrichtung (25)
- mit einer vorrichtungseigenen Funkeinrichtung (60) zum drahtlosen Senden und Empfangen von Daten- und/oder Sprachsignalen (S) in mindestens einem Erweiterungs-Kommunikationsstandard (B,C),
- mit einer vorrichtungseigenen Schnittstelle (55), über die die Erweiterungsvorrichtung (25) an ein Telekommunikationsgerät (5) zum Betrieb des Telekommunikationsgerätes (5) in dem Erweiterungs-Kommunikationsstandard (B, C) anschließbar ist, und
- mit mechanischen Verbindungselementen (70) in einer derartigen Ausführung, daß diese mit mechanischen Befestigungselementen (65) des Telekommunikationsgerätes (5) zum Befestigen der Erweiterungsvorrichtung (25) an dem Telekommunikationsgerät (5) mechanisch verbindbar sind ,
**dadurch gekennzeichnet,** daß
- die vorrichtungseigene Schnittstelle eine Schnittstelle ist, die ihre Schnittstellensignale mit elektromagnetischen Wellen überträgt.

8. Erweiterungsvorrichtung nach Anspruch 7,
**dadurch gekennzeichnet,** daß
- die vorrichtungseigene Schnittstelle (55) eine Funkschnittstelle ist und
- diese Funkschnittstelle von einer weiteren vorrichtungseigenen Funkeinrichtung (50) gebildet ist.

9. Erweiterungsvorrichtung nach Anspruch 8,
**dadurch gekennzeichnet,** daß
- sich die weitere vorrichtungseigene Funkeinrichtung (50) von der einen vorrichtungseigenen Funkeinrichtung (45) im Kommunikationsstandard (B, C) unterscheidet.

10. Erweiterungsvorrichtung nach Anspruch 7,
**dadurch gekennzeichnet,** daß
- die vorrichtungseigene Schnittstelle (55) eine optische Schnittstelle ist.

11. Erweiterungsvorrichtung nach Anspruch 10,
**dadurch gekennzeichnet,** daß
- optische Schnittstelle (55) eine Infrarot-Schnittstelle ist.

12. Erweiterungsvorrichtung nach einem der Ansprüche 7 bis 11,
**dadurch gekennzeichnet,** daß
- die Erweiterungsvorrichtung (25) eine Batterie (80) mit elektrischen Anschlüssen (85) in einer derartigen Anordnung aufweist, daß diese mit Batterieanschlüssen (90) des Telekommunikationsgerätes (5) in Kontakt bringbar sind.

13. Telekommunikationseinrichtung mit einem Telekommunikationsgerät nach einem der Ansprüche 1 bis 6, das mit einer Erweiterungsvorrichtung nach einem der Ansprüche 7 bis 12 in Verbindung steht.
